# EUROPÄISCHE PATENTSCHRIFT

(11) **EP 0 682 843 B1**
(45) Veröffentlichungstag und Bekanntmachung des Hinweises auf die Patenterteilung: **05.01.2000**
(21) Anmeldenummer: 94906180.8
(22) Anmeldetag: 31.01.1994
(51) Int. Cl.: H04N 5/92, H04N 5/93

(54) **VERFAHREN ZUM AUFZEICHNEN UND WIEDERGEBEN EINES ZEITKOMPRIMIERTEN SIGNALS**
TIME-COMPRESSED SIGNAL RECORDING AND REPRODUCING PROCESS
PROCEDE D'ENREGISTREMENT ET DE REPRODUCTION DE SIGNAUX COMPRIMES DANS LE TEMPS

(30) Priorität: 08.02.1993 DE 4303453
(43) Veröffentlichungstag der Anmeldung: 22.11.1995
(73) Patentinhaber: DEUTSCHE THOMSON-BRANDT GMBH, 78048 Villingen-Schwenningen (DE)
(72) Erfinder: KAADEN, Jürgen, D-78052 Villingen-Schwenningen (DE); OLDERMANN, Klaus, D-78052 Villingen-Schwenningen (DE)
(86) Internationale Anmeldenummer: EP9400267
(87) Internationale Veröffentlichungsnummer: WO9418793

(56) Entgegenhaltungen:
- EP-A- 0 454 460
- EP-A- 0 488 337
- EP-A- 0 521 191
- DE-A- 3 808 198
- DE-A- 3 820 835
- US-A- 4 703 465
- US-A- 4 785 358
- US-A- 4 949 187

## Beschreibung

Die Erfindung geht aus von einem Verfahren gemäß dem Oberbegriff des Anspruchs 1. Es ist bekannt, ein Signal, insbesondere ein digitals Fernseh- oder Hörrundfunksignal, über Satelliten oder Breitbandübertragungsstrecken z.B. um den Faktor 20 zeitkomprimiert mit entsprechend erhöhtem Frequenzspektrum zu übertragen, um die Satelliten und Übertragungsstrecken besser auszunutzen. Bei einer Fersehübertragung würde dann für einen Spielfilm von 100 Minuten Dauer nur eine Zeitspanne von etwa 5 Minuten benötigt. An der Empfangsstelle für ein derartiges Signal besteht dabei der Wunsch, das zeitkomprimiert empfangene Signal aufzuzeichnen, zumal die beschriebene Übertragung oftmals während der Nacht erfolgt. Ein Aufzeichnung eines derart komprimierten und breitbandigen Signals ist mit üblichen Recordern ohne weiteres nicht möglich. Darüberhinaus besteht die Notwendigkeit, das zeitkomprimiert übertragene Signal für die Wiedergabe mit einem üblichen Empfänger wieder in Realzeit umzusetzen, also wieder auf die ursprüngliche Zeitdauer und das Frequenzspektrum eines genormten Signals zu expandieren.

Das Dokument DE- A-3 808 198 beschreibt ein Verfahren zur Aufzeichnung von digitalen Videodaten, die mit erhöhter Bandgeschwindigkeit und um denselben Faktor erhöhter Kopftrommeldrehzahl aufgezeichnet werden. Bei der Wiedergabe wird die Bandgeschwindigkeit entsprechend der Betriebsweise gewählt, die Kopftrommeldrehzahl bleibt aber um denselben Faktor wie bei der Aufnahme erhöht. Je nach Wahl der Bandgeschwindigkeit werden die Köpfe bei der Wiedergabe unterschiedlich angesteuert, so daß das Signal nur einmal abgetastet und dann wiedergegeben wird.

Der Erfindung liegt die Aufgabe zugrunde, für ein derartiges Übertragungssystem mit zeitkomprimierter Übertragung ein Verfahren zur Aufzeichnung und Umwandlung auf die Realzeit zu schaffen, das in einem üblichen Recorder möglichst wenig Änderungen benötigt. Diese Aufgabe wird durch die im Anspruch 1 angegebene Erfindung gelöst. Vorteilhafte Weiterbildungen der Erfindung sind in den Unteransprüchen angegeben.

Bei der erfindungsgemäßen Lösung wird also zunächst das zeitkomprimiert übertragenen Signal ohne Änderung der Zeitbasis mit einem Recorder mit Schrägspuraufzeichnung mit einer gegenüber der Nenn-Bandlängsgeschwindigkeit um einen Faktor erhöhten Bandlängsgeschwindigkeit und einer um den gleichen Faktor erhöhten Kopftrommeldrehzahl aufgezeichnet. Durch die Erhöhung von Bandlängsgeschwindigkeit und Kopftrommeldrehzahl wird dabei die Möglichkeit geschaffen, das zeitkomprimierte und in der Bandbreite stark erhöhte Signal aufzuzeichnen. Die Bandlängsgeschwindigkeit hat dabei z.B. den vierfachen Wert der Nenn-Bandlängsgeschwindigkeit. Die Wiedergabe erfolgt bei einer gegenüber der Aufnahme um einen Faktor von z.B. 20 verringerten Bandlängsgeschwindigkeit. Beispielsweise ist die Bandlängsgeschwindigkeit bei der Wiedergabe auf 1/5 der Nenn-Bandlängsgeschwindigkeit herabgesetzt. Durch den genannten Faktor 4 in der Erhöhung der Bandlängsgeschwindigkeit bei der Aufnahme sowie durch den Faktor 5 in der Verringerung der Bandlängsgeschwindigkeit bei der Wiedergabe ergibt sich dann der genannte Faktor 20. Die Wiedergabe erfolgt jedoch mit gegenüber der Aufnahme unveränderten oder geringfügig veränderten Kopftrommeldrehzahl. Das Gesamtsignal ist dann auf die Realzeit gedehnt, z.B. 5 Minuten auf 100 Minuten. Das übertragene Videosignal eines Bildes hat aber nach wie vor den durch die zeitkomprimierte Übertragung bedingten reduzierten Wert von z.B. 1 ms. Dieses Signal wäre also zunächst für die Wiedergabe in einem Fernsehempfänger nicht geeignet. Da jeweils ein Teil des Signals in der verkürzten Zeit von z.B. 1 ms abgetastet wird, das Magnetband aber mit der verringerten Bandlängsgeschwindigkeit läuft, werden zugehörige Signalanteile nacheinander überschreibend (Fig. 4) abgetastet. In einem weiteren Schritt der Erfindung wird nun dieses Signal einem elektronischen Speicher zugeführt, in den z.B. während der Normdauer eines Bildes von 20 ms 20 Signalabschnitte (Fig. 4) eingelesen werden. Diese Signale werden dann mit der Nenn-Bilddauer von z.B. 20 ms aus dem Speicher ausgelesen.

Der modifizierte Videorecorder übernimmt somit die Aufgabe, das Signal für eine Sendung insgesamt auf die Realzeit zu dehnen. Der anschließende elektronische Speicher übernimmt indessen die Aufgabe, z.B.jeweils das Videosignal eines Bildes wieder auf die Nenn-Bilddauer von 20 ms umzusetzen. Durch diese Aufteilung der Aufgaben einerseits auf einen modifizierten Videorecorder und andererseits auf einen elektronischen Speicher wird eine kostengünstige Lösung erreicht, bei der insbesondere nur wenig Modifikationen an dem üblichen Videorecorder notwendig sind.

Insgesamt ergeben sich durch die erfindungsgemäße Lösung folgende Vorteile. Die im Signalweg befindlichen Bauteile und Baugruppen wie z.B. die Köpfe, die Kopftrommel, die Rotationsübertrager der Kopftrommel und die Signalverstärker müssen nur für einen eng begrenzten Frequenzbereich ausgelegt werden, da der Videorecorder nur im hohen Frequenzbereich des zeitkomprimierten Signales arbeitet. Wenn im Gegensatz zur Erfindung der Videorecorder auch die Umsetzung auf Realzeit und auf die niedrige Frequenzlage machen würde, müßten diese Bauteile für den hohen Frequenzbereich des zeitkomprimierten Signals und für den wesentlich niedrigeren Frequenzbereich des üblichen Fernsehsignals ausgelegt sein und würde dadurch extrem kompliziert und teuer. Es ist daher auch nicht notwendig, für die Aufnahme und die Wiedergabe getrennte Köpfe vorzusehen. Die Bandlängsgeschwindigkeit im Recorder ist zwar um den genannten Faktor von z.B. 20 unterschiedlich. Dadurch entsteht aber kein nennenswerter Mehraufwand, weil der Capstanantrieb auch bei üblichen Videorecordern für Sonderfunktionen wie Suchlauf oder Einzelbildfortschaltung um einen derartigen Faktor unterschiedliche Bandlängsgeschwindigkeiten überstreicht.

Bei der Aufzeichnung eines digitalen Signales mit einer Durchnumerierung der einzelnen Bilder kann auch ohne großen Aufwand sichergestellt sein, daß das schnelle Einlesen des zeitkomprimierten Signals vom Recorder und das langsame Auslesen des zeitexpandierten Signals für die Wiedergabe hinsichtlich der aufeinanderfolgenden Bilder richtig erfolgt. Es kann zwar vorkommen, daß die Videosignale einiger vom Recorder gelieferter Bilder nicht korrekt oder gestört sind. Da aber bei der Wiedergabe das Videosignal eines bestimmten Bildes mehrfach abgetastet und dem Speicher zugeführt wird, ist sichergestellt, daß immer genügend zeitkomprimierte Bilder mit dem richtigen Videosignal vorliegen. Es ist dabei auch möglich, das abgetastete Videosignal einer Auswertschaltung zuzuführen, die zunächst die aufeinanderfolgenden Videosignale verschiedener Zeitabschnitte überprüft und nur das oder die Videosignale dem Speicher zuführt, die als einwandfrei erkannt werden. Grundsätzlich benötigt der elektronische Speicher für ein bestimmtes Bild nur ein einziges der nacheinander abgetasteten Videosignale. Die Erfindung ist sowohl für ein Videosignal als auch für ein Audiosignal anwendbar und insbesondere für Digitalsignale dieser Art geeignet.

Die Erfindung wird im folgenden anhand der Zeichnung am Beispiel eines Fernseh-Vidosignals erläutert. Darin zeigen
- Fig. 1: ein Blockschaltbild für die Empfangsstation des gesendeten Signales für die Aufzeichnung auf dem Videorecorder,
- Fig. 2: das Blockschaltbild für die anschließende Wiedergabe mit der Umsetzung auf Realzeit,
- Fig. 3: das Spurschema bei der mehrfachen Abtastung des Magnetbandes bei der Wiedergabe und
- Fig. 4: keilförmige Hüllkurven des bei der Wiedergabe vom Magnetband abgetasteten Signals für aufeinanderfolgende Abtastungen.

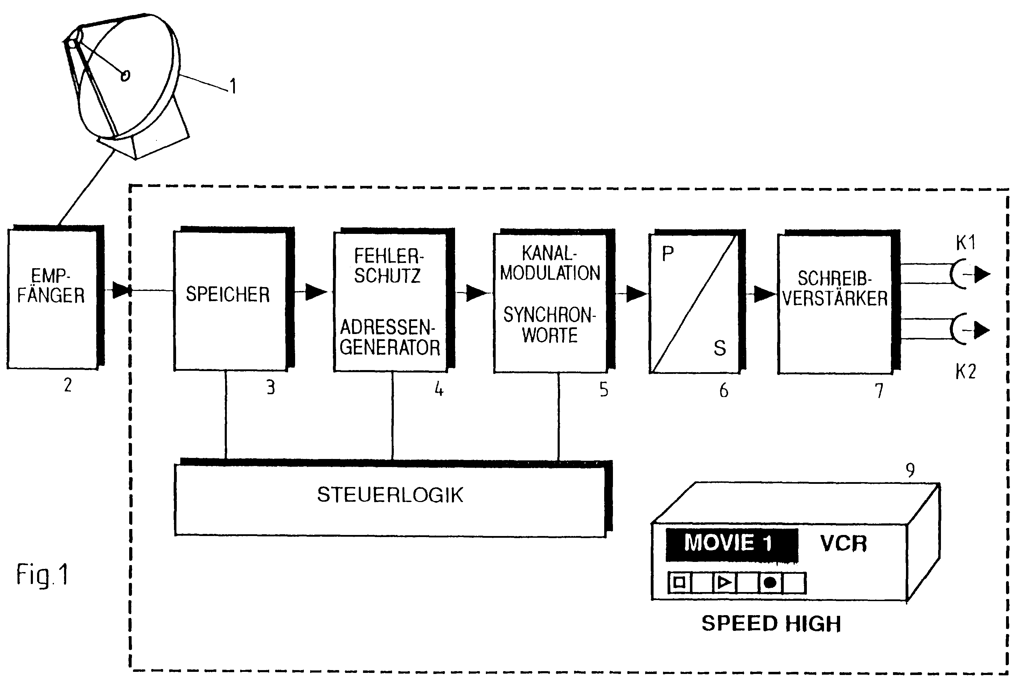

In Fig. 1 wird von einem nicht dargestellten Satelliten mit der Empfangsantenne 1 das beschriebene Videosignal empfangen, das insgesamt um den Faktor 20 zeitkomprimiert ist. Dieses Signal steht am Digitalausgang des Empfängers 2 zur Verfügung. Die Übertragung erfolgt vorzugsweise mit einem Vielträgersystem, wobei jeder Einzelträger M-PSK (m-ary-phase shift-keying) oder M-QAM (m-state-qaternary-amplitude-modulation) moduliert ist. Das Digitalsignal vom Ausgang des Empfängers 2 wird in den Speicher 3 geschrieben, der die Information mehrerer, vorzugsweise von vier Spuren aufnehmen kann und in sogenannter ping-pong-Struktur aufgebaut ist. Das bedeutet, daß der erste Teil des Speichers beschrieben wird, während der zweite, gleich große Bereich ausgelesen wird. Mit dem Auslesen eines Zeitsteuersignals, abgeleitet vom Empfängersignal, tauschen die beiden Speicherhälften ihre Funktion. Das Servosystem ist ebenfalls auf dieses Signal synchronisiert, so daß immer mit Beginn einer Spur umgeschaltet wird. In der folgenden Fehlerschutzstufe 4 werden Gruppen von Daten zusammengefaßt. Unter Hinzufügung von Datenworten nach dem sogenannten "reed solomon code"-Verfahren und Einfügung von Adreßinformationen wird ein Blockformat gebildet.

In der Kanalmodulationsstufe 5 erfolgt eine spektrale Anpassung des Signals an die Eigenschaften des Magnetbandkanals. In der Stufe 5 wird jedem Block ein Synchronwort hinzugefügt, das für alle Blöcke gleich ist und bei der Wiedergabe leicht detektiert werden kann. Die 10 Bit breiten Datenworte werden in dem Parallel/Serien-Umsetzer 6 in einen seriellen Datenstrom umgewandelt. Dieser Datenstrom gelangt über den Schreibverstärker 7 auf die Magnetköpfe K1, K2 des Videorecorders 9 und wird dort in der beschriebenen Weise aufgezeichnet. Der Videorecorder 9 arbeitet dabei vorzugsweise mit einer Bandlängsgeschwindigkeit, die gleich dem Vierfachen der Nenn-Bandlängsgeschwindigkeit ist, während die Kopftrommeldrehzahl um einen gleichen Faktor erhöht ist. Das empfangene zeitkomprimierte Videosignal wird somit mit dem Recorder 9 während der verkürzten Übertragungszeit von z.B. 5 Min. bei einem Film von 100 Minuten Realzeit aufgezeichnet.

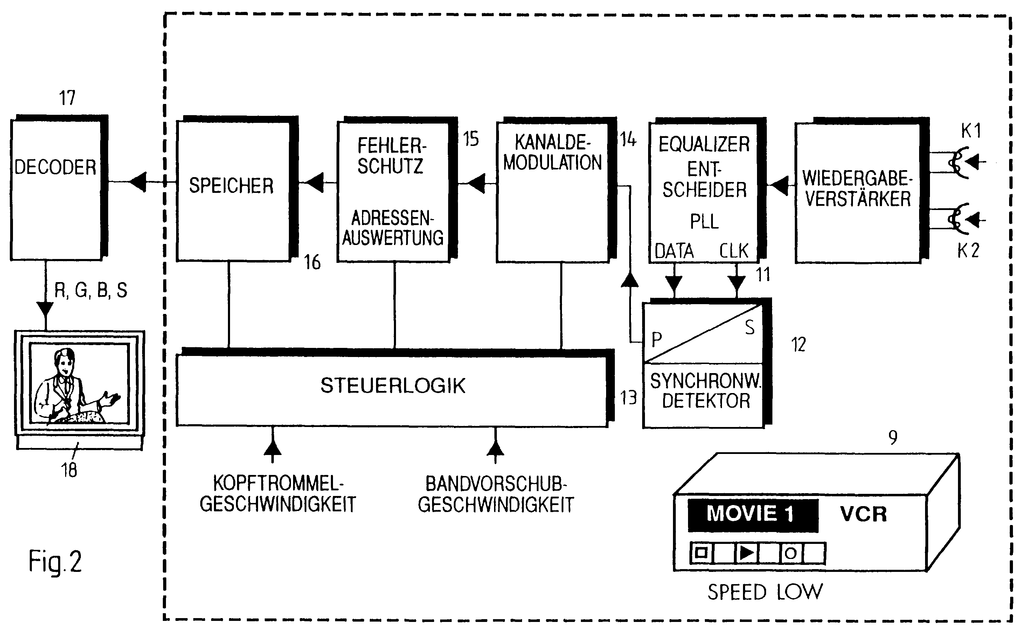

Fig. 2 zeigt das Blockschaltbild für die Wiedergabe und die Umsetzung des Signals auf Realzeit und den ursprünglichen Frequenzbereich eines genormten Fernsehsignals. Der Videorecorder 9 arbeitet jetzt mit einer Bandlängsgeschwindigkeit, die 1/5 der Nenn-Bandlängsgeschwindigkeit beträgt, während die Kopftrommeldrehzahl gegenüber der Aufnahme gemäß Fig. 1 unverändert bleibt. Durch den Faktor 4 in der Erhöhung der Bandlängsgeschwindigkeit bei der Aufnahme gemäß Fig. 1 und den Faktor 5 in der Verringerung der Bandlängsgeschwindigkeit bei der Wiedergabe gemäß Fig. 2 jeweils bezogen auf die Nenn-Bandlängsgeschwindigkeit wird die Zeitdehnung des Gesamtsignals auf die Realzeit, also z.B. von 5 Minuten auf 100 Minuten, erreicht. Das mit den Köpfen 8 abgetastete Signal, das zwar insgesamt die Realzeit einnimmt aber hinsichtlich des Videosignals für ein Bild noch zeitkomprimiert ist und die hohe Frequenzlage hat, gelangt über den Wiedergabeverstärker 10 auf die Equalizer/ Entscheider und PLL-Schaltung 11. Die Schaltung 11 liefert das Datensignal sowie den Takt Clk auf dem Parallel/Serien-Umsetzer 12, der mit einem Synchronwortdetektor 13 zusammenarbeitet. Das Signal vom Ausgang des Umsetzers 12 gelangt über den Kanalmodulator 14 auf die Schaltung 15 zum Fehlerschutz und zur Adressenauswertung. Das Ausgangssignal der Schaltung 15 gelangt zu dem elektronischen Speicher 16. In dem Speicher 16 werden somit die vom Band abgetasteten Videosignale der aufeinanderfolgenden Bilder nacheinander eingelesen, z.B. während der Nenn-Bilddauer von 20 ms 20 Signale mit je einer Dauer von 1 ms, deren Information jeweils einander überlappen. Das Videosignal wird anschließend aus dem Speicher 16 während der Nenn-Bilddauer von z.B. 20 ms ausgelesen. Am Ausgang des Speichers 16 steht also wieder ein Signal zur Verfügung, das die für die Wiedergabe notwendige Nenn-Bilddauer von z.B. 20 ms hat und auch insgesamt auf die Realzeit gedehnt ist. Dieses Signal gelangt auf den Dekoder 17, der ein übliches RGBS-Signal für die Wiedergabe mit dem Fernsehempfänger 18 liefert.

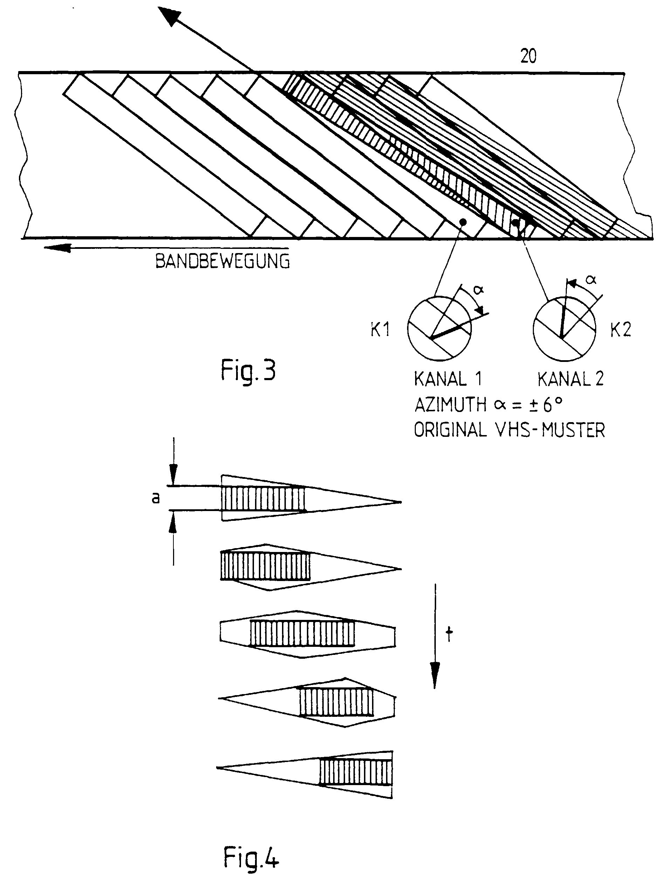

Fig. 3 zeigt das Spurmuster der Schrägspuren auf dem Magnetband 20 des Recorders 9 gemäß Fig. 1, 2 bei 1/5 der Nenn-Bandlängsgeschwindigkeit und ¼ der Kopf trommeldrehzahl. Bei der Wiedergabe überstreichen die Videoköpfe K1, K2 fünfmal eine Spur, bevor sie diese Spur ganz verlassen. Die Spurwinkel bei Aufnahme und Wiedergabe stimmen nicht überein, so daß nur Spursequmente abgetastet werden und keilförmige Hüllkurven des abgetasteten Wiedergabesignals entstehen.

Fig. 4 zeigt den keilförmigen Verlauf der Hüllkurve des vom Band 20 abgetasteten Wiedergabesignals für fünf aufeinanderfolgende Schrägspurabtastungen. Durch den langsamen Bandvorschub kommen nacheinander mehrere Bereiche in das Maximum. Da für die sichere Wiedergabe ein Mindestpegel a ausreicht, entstehen Überschneidungen und ermöglichen somit eine lückenlose Wiedergabe des aufgezeichneten Signals. Es ist ersichtlich, daß ohne Spurnachführsystem durch überlappende, phasenverschobene Abtastungen der Spuren alle notwendigen Informationen gewonnen werden können. Ein ähnliches Schema der einander überlappenden Maxima, nur in größerer Anzahl, erhält man bei geänderter Kopftrommeldrehzahl, z.B. 10 Maxima bei ½ Kopftrommelzahl und 20 Maxima bei voller Kopftrommeldrehzahl.

Im folgenden wird eine spezielle Lösung im Detail beschrieben.

Das von den Köpfen (einkanalige Aufzeichnung, 2 Köpfe, 183° Umschlingungswinkel) abgegebene Wiedergabesignal wird linear verstärkt und im Equalizer 11 entzerrt. Amplitudenverluste von tief- und hochfrequenten Signalanteilen werden hier ausgeglichen. Die Gruppenlaufzeit im Arbeitsbereich wird linearisiert und Rauschanteile mit einem roll-off Filter ausgeblendet.

Der nachfolgende Entscheider gewinnt ein digitales Signal, das in der PLL-Stufe zur Taktrückgewinnung benutzt wird. Der seriell vorliegende Datenstrom wird nach den Synchronworten abgessucht, die den Seriell/Parallelwandler 12 und den Kanaldemodulator 14 steuern. Hier erfolgt die Rückwandlung auf 8 Bit breite Datenworte. In der Fehlerkorrekturstufe werden die gelesenen Paritätsinformationen mit den aktuell gerechneten verglichen, und gegebenenfalls wird eine Korrektur durchgeführt. Die Daten gelangen danach in den Ausgabespeicher 16 und werden aus diesem mit dem zeitexpandierten Lesetakt in den Videodecoder gegeben. Dieser macht den als data reduction beschriebenen Prozess rückgängig und treibt mit den gewonnenen R,G,B,S-Signalen das Display.

Wie für die Aufzeichnung beschrieben, ist auch bei der Wiedergabe ein ping/pong Speicher im Einsatz. Die vom Wiedergabesystem schnell in den Speicher geschriebenen und im Prinzip dabei mehrfach wiederholten Daten werden vom Videodecoder 17 langsam ausgelesen. Er stellt dafür den Lesetakt zur Verfügung. Die Daten können dabei mit einem kontinuierlichen Takt aus dem Speicher gelesen werden oder mit einem gebursteten Takt entsprechend höherer Frequenz.

Die Umsteuerung des Speichers (Auslesen von **ping** zeitgleich mit Beschreiben von **pong** bzw. umgekehrt) erfolgt im festen Zeitraster von vorzugsweise einem oder vielfachen Halbbildumschaltimpuls(en). (50 Hz System = 20 ms, 40 ms ...). Dieses Steuersignal erzeugt der Videodecoder 17 selbst, der als MPEG-Decoder ausgebildet sein kann.

Damit neue Daten aus dem Speicher 16 ausgelesen werden können, müssen aktuelle neue Daten zur Verfügung stehen. Nach jeder Speicherumschaltung wird deshalb der Schreibzugriff freigegeben. Gelesene und als korrekt erkannte oder fehlerkorrigierte Datenabschnitte werden blockweise an die zugehörige Adresse im Speicher geschrieben. Jeder beschriebene Blockabschnitt wird in einem Kontrollspeicher zusätzlich markiert. Sobald alle Kontrollspeicheradressen gesetzt sind, endet der Schreibvorgang.

Es ist ebenfalls möglich, den Bandvorschub erst wieder dann zu aktivieren, wenn eine neue Information gewünscht wird. Damit steuert der Füllgrad des Speichers die Bandvorschubgeschwindigkeit. Dies wird insbesondere dann interessant, wenn der Speicher eine größere Datenmenge fassen kann, z.B. die von 8 Spuren. Wegen der vorgenommenen Überabtastung kann z.B. bis hin zur ca 8-fachen Normalwiedergabegeschwindigkeit(2,5-fache Überabtastung bei Kopftrommel 100 U/s) ein kontinuierliches Datensignal in den Speicher geschrieben werden. Hat dieser die Kapazität von 8 Spuren, so kann der Videodecoder pro Speicherumschaltimpuls die Information von 8 Bildern vielfältig aufbereiten: Auswahl eines aus 8 (Zeitraffer sprunghaft). Alle 8 pro Umschaltintervall (Zeitraffern kontinuierlich).Mittelung aus 8 pro Umschaltintervall. Diese große Speicherkapazität ist ebenfalls für das Einfrieren von 8 Bildern geeignet, indem jeder der zugehörigen Speicherabschnitte wahlfrei zur Verfügung steht. Auswahl eines aus 8 (Einzelbildanalyse, Bandvorschub steht).

## Patentansprüche

1. Verfahren zum Aufzeichnen und Wiedergeben eines zeitkomprimierten Signals mit einem Videorecorder mit Schrägspuraufzeichnung mit einer Nenn-Bandlängsgeschwindigkeit und einer Nenn-Kopftrommeldrehzahl, wobei das zeitkomprimierte Signal bei einer gegenüber der Nenn-Bandlängsgeschwindigkeit um einen Faktor erhöhten Bandlängsgeschwindigkeit in Verbindung mit einer um den gleichen Faktor erhöhten Kopftrommeldrehzahl aufgezeichnet wird und bei einer gegenüber der Aufnahme um einen Faktor verringerten Bandlängsgeschwindigkeit in Verbindung mit der erhöhten Kopftrommeldrehzahl wiedergegeben wird, **dadurch gekennzeichnet,** daß das zeitkomprimierte Signal mit einem elektronischen Speicher (16) auf die Zeitbasis und die Frequenzlage für Realzeit-Wiedergabe umgesetzt wird, indem das durch Überabtastung einer Spur mehrfach gewonnene Signal in den Speicher (16) eingeschrieben und mit der Nenntaktrate während der Realzeit ausgelesen wird.

2. Verfahren nach Anspruch 1, **dadurch gekennzeichnet,** daß die Kopftrommeldrehzahl bei der Wiedergabe gegenüber der Kopftommeldrehzahl bei der Aufnahme nicht oder nur wenig geändert ist.

3. Verfahren nach Anspruch 1, **dadurch gekennzeichnet,** daß die Kopftrommeldrehzahl bei der Wiedergabe etwa 1/2 oder 1/4 der Kopf trommeldrehzahl bei der Aufnahme beträgt.

4. Verfahren nach Anspruch 1, **dadurch gekennzeichnet,** daß bei der Wiedergabe das vom Recorder (9) gelieferte Wiedergabesignal einer Auswertschaltung zugeführt wird, die die aufeinanderfolgenden, teilweise gleichen Videosignale eines Abschnittes oder Blockes prüft und nur die als einwandfrei erkannten Signale auswählt und dem Speicher (16) zuführt.

5. Verfahren nach Anspruch 1, **dadurch gekennzeichnet,** daß das Auslesen der Daten aus dem Speicher (16) mit einem Videodecoder (17) mit einer kontinuierlichen Taktimpulsfolge oder mit einem gebursteten Takt höherer Frequenz erfolgt.

6. Verfahren nach Anspruch 1, **dadurch gekennzeichnet,** daß der Bandvorschub in dem Recorder (9) in Abhängigkeit von dem Füllstand des Speichers (16) gesteuert und jeweils dann aktiviert wird, wenn für das Einschreiben in den Speicher (16) neue Daten benötigt werden.

## Claims

1. Time-compressed signal recording and reproducing process by a video recorder with helical track recording at a nominal tape longitudinal speed and a nominal head drum speed of rotation, the time-compressed signal being recorded at a tape longitudinal speed increased by a factor with respect to the nominal tape longitudinal speed in conjunction with a head drum speed of rotation increased by the same factor and being reproduced at a tape longitudinal speed reduced by a factor with respect to the recording in conjunction with the increased head drum speed of rotation, characterized in that the time-compressed signal is converted by an electronic memory (16) to the time base and the frequency position for real-time reproduction, in that the signal obtained multiply by overscanning a track is written to the memory (16) and is read out with the nominal clock rate during real time.

2. Process according to Claim 1, characterized in that the head drum speed of rotation during reproduction is not altered, or only little, with respect to the head drum speed of rotation during recording.

3. Process according to Claim 1, characterized in that the head drum speed of rotation during reproduction is about 1/2 or 1/4 of the head drum speed of rotation during recording.

4. Process according to Claim 1, characterized in that, during reproduction, the reproduction signal supplied by the recorder (9) is fed to an evaluation circuit, which checks the successive, partly identical video signals of a section or block and selects and feeds to the memory (16) only the signals found to be satisfactory.

5. Process according to Claim 1, characterized in that the reading out of the data from the memory (16) takes place by a video decoder (17) with a continuous clock pulse sequence or with a clock burst of higher frequency.

6. Process according to Claim 1, characterized in that the tape advancement is controlled in the recorder (9) as a function of the filling level of the memory (16) and is activated whenever new data are required for writing into the memory (16).

## Revendications

1. Procédé d'enregistrement et de reproduction de signaux comprimés dans le temps par un magnétoscope doté d'un enregistrement hélicoïdal, à une vitesse de défilement longitudinal nominale et à un nombre de tours du cylindre de tête nominal, où le signal augmenté dans le temps est enregistré, dans le cas d'une vitesse de défilement longitudinal augmentée d'un facteur par rapport à la vitesse de défilement longitudinal nominale, en relation avec un nombre de tours du cylindre de tête augmenté du même facteur et où le signal est reproduit dans le cas d'une vitesse de défilement longitudinal réduite d'un facteur par rapport à l'enregistrement, en relation avec une augmentation du nombre de tours du cylindre de tête, **caractérisé en ce que** le signal comprimé dans le temps est converti par une mémoire électronique en base de temps et la position en fréquence est convertie pour la reproduction en temps réel pendant que le signal produit de manière répétée par le suréchantillonnage d'une piste est enregistré dans la mémoire et est lu à la cadence nominale en temps réel.

2. Procédé conforme à la revendication 1, **caractérisé en ce que** le nombre de tours du cylindre de tête effectué lors de la reproduction ne présente pas, voire peu de différences par rapport au nombre de tours du cylindre de tête effectué lors de l'enregistrement.

3. Procédé conforme à la revendication 1, **caractérisé en ce que** le nombre de tours du cylindre de tête effectué lors de la reproduction représente environ 1/2 ou 1/4 du nombre de tours du cylindre de tête effectué lors de l'enregistrement.

4. Procédé conforme à la revendication 1, **caractérisé en ce que** le signal de reproduction délivré par le magnétoscope (9) lors de la reproduction est acheminé à un circuit d'évaluation qui vérifie les signaux vidéo successifs, en partie identiques, d'un segment ou d'un bloc et choisit uniquement les signaux reconnus comme parfaitement sans perturbations puis les achemine à la mémoire (16).

5. Procédé conforme à la revendication 1, **caractérisé en ce que** la lecture des données dans la mémoire par un magnétoscope (17) s'effectue à une fréquence d'impulsions de synchronisation continue ou par une impulsion synchronisée de fréquence supérieure.

6. Procédé conforme à la revendication 1, **caractérisé en ce que** l'avance de bande du magnétoscope (9) est commandée puis activée en fonction de l'état de remplissage de la mémoire (16) lorsque de nouvelles données doivent être enregistrées dans la mémoire (16).
